# EUROPEAN PATENT APPLICATION

(11) **EP 4 607 707 A1**
(43) Date of publication of application: **27.08.2025**
(21) Application number: 24158694.0
(22) Date of filing: 20.02.2024
(51) Int. Cl.: H01R 9/05, H01R 43/04, H01R 43/28, H01R 103/00, H01R 13/6592, H01R 13/58

(54) **FERRULE FOR A SHIELDED CABLE, TERMINAL ASSEMBLY AND PROCESS OF TEMINATING A SHIELDED CABLE**

(71) Applicant: Aptiv Technologies AG, 8200 Schaffhausen (CH)
(72) Inventor: DEMOMENT, Fabrice, 28210 Nogent-le-Roi (FR); LACOTE, Stephane, 28000 Chartres (FR); LUIS, André Michael, 78280 Guyancourt (FR)
(74) Representative: INNOV-GROUP

(57) **Abstract**

An inner ferrule (4) for a terminal assembly configured to terminate a shielded cable (2). The inner ferrule (4) is formed of a dielectric material. The inner ferrule (4) has a generally tubular shape. The inner ferrule (4) comprises a plurality of ribs extending longitudinally parallel to a longitudinal axis and radially inwardly, over a height, from the inner surface of the inner ferrule (4). Set of inner ferrules (4) comprising at least two inner ferrules (4) differing from the each other in the height of their respective ribs. A terminal assembly configured to terminate a shielded cable. A method of terminating a shielded cable.

## Description

### TECHNICAL FIELD OF THE INVENTION

The invention relates to a termination assembly of an electrically shielded cable for use in an electrical power circuit of electric or hybrid vehicle. More particularly, the invention relates to such an assembly comprising a ferrule.

### BACKGROUND OF THE INVENTION

Shielded cables are commonly used in the automotive industry, in particular for transmitting electrical currents of high intensity. Such shielded cables often have the following structure. They comprise an inner conductor or core conductor. This inner conductor is covered by an inner insulator or inner insulating sheath. The inner insulator is surrounded by a shielding outer conductor or shielding braid. The outer conductor is covered by an outer insulator or outer insulating sheath. Such shielded cables can be connected to a power terminal (male or female terminal). To connect such a power terminal, a free end of the shielded cable can generally be prepared as follows. A portion of the outer insulator is removed in the vicinity of the cable free end, to expose a portion of outer conductor. A portion of outer conductor (shorter that the portion of removed outer insulator) is removed to expose a portion of inner insulator, and a portion of inner insulator is removed to expose a portion of the inner conductor. Optionally, the portion of outer conductor remaining exposed on the inner insulator is folded back in a direction opposite to the free end of the shielded cable.

Ferrules are used to connect the outer conductor to a conductive part of a connector housing or similar. To do so, it is known to use an inner ferrule and an outer ferrule. For example, the inner ferrule is placed between the inner insulator and the portion of outer conductor which is folded back. Alternatively, the inner ferrule is inserted below a portion of the outer conductor. Then, in both cases, the outer conductive ferrule is placed and crimped over the inner ferrule.

Such a termination of shielded cable has several drawbacks. For example, ferrules of different diameters are required to fit cables of different cross-sections; the assembly process must follow steps in a specific order and is not versatile; thin, electrically conductive inner ferrules can break during crimping and a rupture of the inner ferrule can cause an undesirable electrical shorting between the inner conductor and the outer conductor; if the inner and outer ferrules are formed by either deep draw stamping or machining, their manufacturing processes are relatively expensive; the inner and outer ferrule sizes may differ only slightly for different shielded cables which may make it difficult to visually distinguish between inner or outer ferrules of different sizes (applying markings, such as a color coding, may be used to help identify different ferrules, however, applying these markings is an additional manufacturing process that undesirably increases ferrule manufacturing time and cost), etc.

Therefore, a reliable ferrule assembly that can easily accommodate different cable sizes remains desired.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in themselves may also be inventions or may participate to an invention.

### BRIEF SUMMARY OF THE INVENTION

The following disclosure presents solutions to at least partially mitigate at least one drawback of the prior art.

In accordance with an aspect, the disclosure relates to an inner ferrule for a terminal assembly configured to terminate a shielded cable, the inner ferrule being formed of a dielectric material, the inner ferrule having a generally tubular shape. It should be noted that in this document a generally tubular shape can be cylindrical, for example cylindrical of revolution, i.e. with a circular directing curve or base. However, the circular directing curve or base may also have an oval shape, a square shape, a rectangular shape, etc. The inner ferrule has an inner surface and an outer surface both extending around a longitudinal axis, and the inner ferrule comprising a plurality of ribs extending longitudinally parallel to the longitudinal axis and radially inwardly, over a height, from the inner surface of the inner ferrule. An inner ferrule with longitudinal ribs is easier to manufacture than an inner ferrule with circular ribs. Further, the deflection behavior of longitudinal ribs during the crimping is more advantageous that the behavior of circular ribs. Such an inner ferrule is made of a dielectric material and can be easily manufactured by molding. Different inner ferrules with ribs of different radial lengths can be easily manufactured to adapt different cable cross-sections.

Such an inner ferrule optionally further comprises any of the following features, considered independently of one another or in combination with one or more others:
- it has a cut-out between the inner and outer surfaces, so that the inner and outer surfaces of the ferrule are not continuous, allowing the inner ferrule be opened; such a feature allows for an easier mounting of the inner ferrule on the shielded cable; further, whereas a closed inner ferrule (closed ring) must be placed on the shielded cable before the terminal crimping operation, an open inner ferrule can be fitted after the terminal crimping operation; in this case, the inner ferrule can have a joint configured to facilitate opening of the inner ferrule, in order to further facilitate its mounting onto the shielded cable;
- it comprises a plurality of grooves extending longitudinally parallel to the longitudinal axis, each groove being formed in the outer surface of the inner ferrule opposite to a rib; such grooves provide more flexibility to the inner ferrule, helping the ribs to orientate so as to prevent the inner ferrule from breaking during the crimping of the outer ferrule;
- it comprises a longitudinal end from which extends a strap to which a termination ring is connected; the termination ring and the inner ferrule form a single piece, which facilitates the supply and logistics of the parts manufactured in this way;
- the termination ring is formed of two essentially semi-tubular (e.g., semi-cylindrical) portions connected by a joint; in order to further facilitate its mounting on the shielded cable;
- the termination ring comprises latching means configured to secure the semi-tubular portions together in order to form a complete ring;
- an up-right edge extends, at least partially around the longitudinal axis, outwardly radially from a longitudinal end; this help positioning the outer ferrule before crimping.

In accordance with another aspect, the disclosure relates to a set of inner ferrules comprising at least two inner ferrules that differ from the each other in the height of their respective ribs

In accordance with another aspect, the disclosure relates to a terminal assembly configured to terminate a shielded cable having an inner conductor, an inner insulator surrounding the inner conductor, an outer conductor surrounding the inner insulator, and an outer insulator surrounding the outer conductor. This terminal assembly comprises an outer ferrule formed of a conductive material (that has a generally tubular - e.g., cylindrical - shape before crimping). This terminal assembly further comprises an inner ferrule as above disclosed, the outer conductor comprising an end (that can optionally be folded back) between at least a portion of the outer surface of the inner ferrule and at least a portion of the outer ferrule.

Optionally, a termination ring is mounted over the inner insulator and is configured to maintain the outer conductor towards the inner ferrule.

In accordance with another aspect, the disclosure relates to a method of terminating a shielded cable having an inner conductor, an inner insulator surrounding the inner conductor, an outer conductor surrounding the inner insulator, and an outer insulator surrounding the outer conductor. This method comprises stripping steps and ferrule mounting steps. The stripping steps comprise:
- stripping a first portion of the outer insulator, at a free end of the shielded cable, thereby forming a first stripped portion of the outer conductor,
- cutting a portion of said first stripped portion of the outer conductor, thereby leaving on the inner insulator a second stripped portion of the outer conductor,
- optionally, folding back said second stripped portion of the outer conductor in a direction away from the free end of the shielded cable.

The ferrule mounting steps comprises, independently of their order with regard to each stripping steps,
- mounting an inner ferrule over the inner or outer insulator,
- mounting an outer ferrule over the inner ferrule with at least a portion of the outer conductor at least partially inserted between the outer ferrule and the inner ferrule.

Further, the inner ferrule used in this method comprises a plurality of ribs extending longitudinally parallel to the longitudinal axis and radially inwardly, over a height, from the inner surface of the inner ferrule.

Optionally, this method comprises stripping a portion of the inner insulator, connecting a terminal to a stripped portion of the inner insulator, and crimping the outer ferrule over the inner ferrule with said at least a portion of the outer conductor at least partially inserted between the outer ferrule and the inner ferrule, the shielded cable being chosen from cables with a cross-section comprised between 25 and 120 square-millimeters, the innerferrule being chosen with ribs configured to adapt to the chosen shielded cable, the outer ferrule being the same whatever the chosen shielded cable. For example, the shielded cable is chosen between a cable having a cross section of 35 square-millimeters, a cable having a cross section of 50 square-millimeters, a cable having a cross section of 70 square-millimeters and a cable having a cross section of 95 square-millimeters, the inner ferrule being chosen with ribs configured to adapt to the chosen shielded cable, the outer ferrule being the same whatever the chosen shielded cable.

Optionally, this method comprises a step of inserting the terminal connected to the shielded cable through the outer ferrule. In other words, the outer ferrule can be placed on the shielded cable and crimped over the inner ferrule either before or after the step of connecting a terminal to the free end of the shielded cable. The method therefore gains in versatility.

Optionally, this method comprises a step of mounting the termination ring over the inner insulator to maintain the outer conductor towards the inner ferrule.

### BRIEF DESCRIPTION OF THE SEVERAL VIEWS OF THE DRAWING

The present invention will now be described, by way of examples with reference to the accompanying drawings, in which:
Figure 1 is a perspective side view illustrating a method of assembling a dielectric inner ferrule and an outer ferrule onto a shielded cable;
Figure 2 is similar to figure 1 but for a cable having a larger cross-section;
Figure 3 is a perspective view of an embodiment example of an inner ferrule;
Figures 4A to 4F schematically illustrates stripping steps;
Figure 5 is a perspective side view of an example of cable assembly before mounting an outer ferrule;
Figure 6 is a transversal cross-section of a portion of a shielded cable over which an inner ferrule has been mounted and an outer ferrule has been crimped;
Figure 7 is a perspective side view illustrating of another embodiment example of an inner ferrule;
Figure 8 is a perspective side view illustrating a prior art assembly of an inner ferrule and an outer ferrule onto a shielded cable;
Figure 9 is a perspective side view illustrating an assembly of the inner ferrule shown in figure 7, onto a shielded cable;
Figure 10 is similar to figure 9, with a termination ring clamped onto the shielded cable; and
Figure 11 is a longitudinal cross-section of a portion of a shielded cable over which the inner ferrule of figure 7 and an outer ferrule have been mounted.

### DETAILED DESCRIPTION OF THE INVENTION

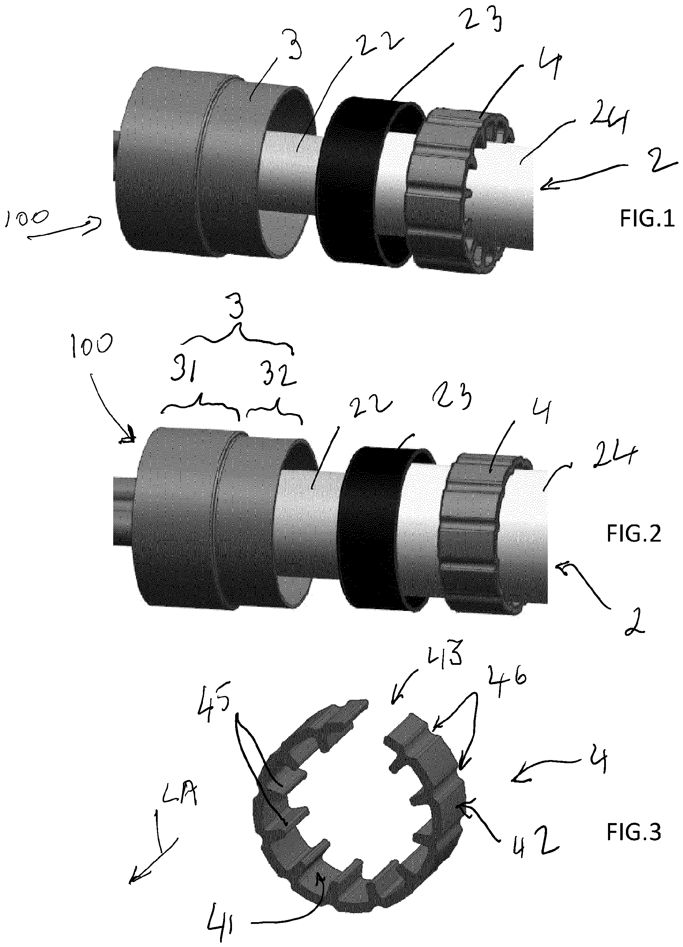

Figures 1 and 2 show two different embodiments of a shielded cable termination 100.

These two embodiments comprise a shielded cable 2. The shielded cables 2 of these two embodiments differ by their cross-sections. For example, the shielded cable 2 of figure 1 has a cross-section of 50 mm² and the shielded cable 2 of figure 2 has cross-section of 95 mm². The shielded cables 2 of these two embodiments comprise
- an inner conductor 21 (e.g., a multi-strand electrical wire or a single core electrical wire); for example, the inner conductor 21 is made of copper or aluminum or an alloy of these metals, etc.;
- an inner insulator 22 (i.e. a dielectric inner sheath) covering the inner conductor 21;
- an outer conductor 23 (e.g. a shielding braid, but it could also be foil shields, a combination of a braid and foil shields, etc.), the inner insulator 22 electrically insulating the inner conductor 21 from the outer conductor 23;
- an outer insulator 24 (i.e. a dielectric outer sheath).

These two embodiments comprise an outer ferrule 3 and an inner ferrule 4.

For example, the outer ferrule 3 is the same in these two embodiments. For example, the outer ferrule 3 is made of a conductive metallic material, such as a tin-plated copper alloy. The outer ferrule 3 may be formed by a deep draw stamping process or a machining process. The outer ferrule 3 has a tubular shape extending longitudinally between a front portion 31 and a rear portion 32. For example, the rear portion 32 is intended to be crimped over the inner ferrule 4. For example, the front portion 31 has a generally cylindrical shape before and after crimping. For example, the rear portion 32 has a generally cylindrical shape before crimping but not necessarily after crimping. In the illustrated example, the front portion 31 has internal diameter equal or greater than the rear portion 32 (but it could be the reverse). At least one open end of the outer ferrule 3 has an opening with an internal diameter as great as, or greater than, the outer diameter of the inner ferrule 4. For example, the rear portion 32 has an opening (before crimping) as large as, or larger than, the external dimension of the inner ferrule 4.

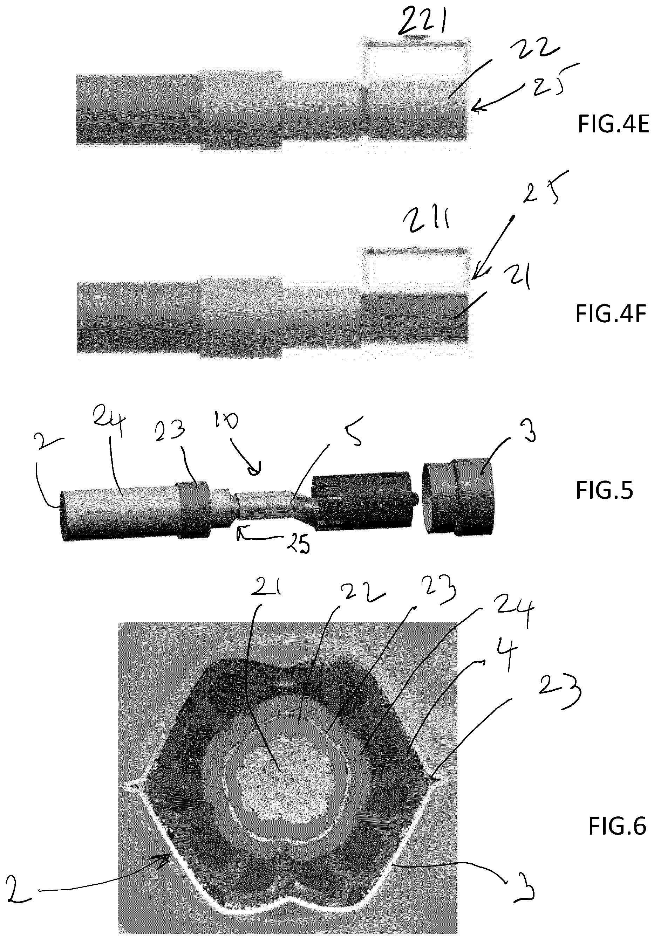

The inner ferrule 4 is made of molded plastics. For example, the plastic material in which is made the inner ferrule 4 is comprised in the following list: Polyamides, polyesters, polyolefins, polyacetals. In the illustrated example, the inner ferrule 4 has a generally cylindrical or ring shape. The inner ferrule 4 has an inner surface 41 and an outer surface 42 both extending around a longitudinal axis LA. The ringshaped inner ferrule 4 may not be completely closed. Indeed, the inner ferrule 4 may have a cut-out 43 between the inner 41 and outer 42 surfaces, so that the inner 41 and outer 42 surfaces of the inner ferrule 4 are not continuous, allowing the inner ferrule 4 to be opened. In this case, for example, the inner ferrule 4 may comprise a joint 44 configured to facilitate opening the inner ferrule 4. The inner ferrule 4 comprises a plurality of ribs 45 (e.g., 11 ribs 45) extending longitudinally parallel to the longitudinal axis LA and radially inwardly, over a height, from the inner surface 41 of the inner ferrule 4. For example, a plurality of grooves 46 extending longitudinally parallel to the longitudinal axis LA may be formed in the outer surface 42 of the inner ferrule 4. For example, one or several grooves 46 are each opposite to a respective rib 45. The radial length (or height) of the ribs 45 is adapted to the diameter difference between the outer diameter of the outer insulator 24 and the inner diameter of the outer ferrule 3 (e.g., the inner diameter of the rear portion 32 of the outer ferrule 3 before crimping). In other words, it is advantageous to have the same outer ferrule 3 whatever the cross-section of the shielded cable 2 (for example for a cross-section comprised between 25 and 120 mm²). Then, the inner ferrule 4 is the only part that changes (i.e., with a same general structure, the ribs 45 varying in high and number). One can note that, for example, the outer ferrule 3 can be chosen so that its smallest inner diameter is large enough to allow a terminal 5 (e.g. a female terminal as shown in figure 5) to pass through. It then becomes possible to connect (e.g., by crimping) the terminal 5 onto the inner conductor 21, before placing and crimping the outer ferrule 3 onto the inner ferrule 4 (see figure 6).

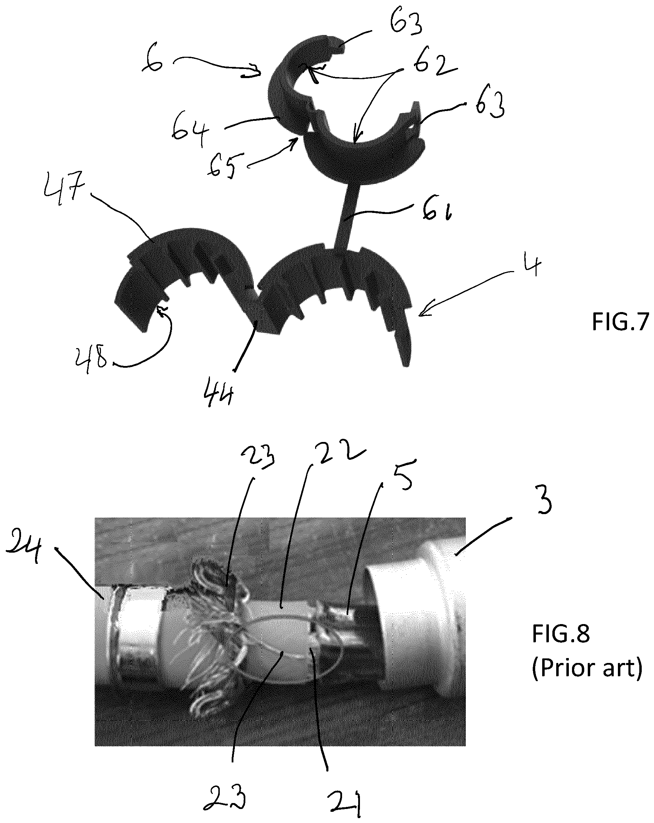

The shape of the inner ferrule 4 may vary. For example, the outer surface (42) of the inner ferrule 4 may not have grooves 46. For example, the inner ferrule 4 may be formed of two essentially semi-cylindrical portions connected by a joint 44 (see figure 7). For example, the inner ferrule 4 may have rim portions 47 at a rear longitudinal side (see figures 7 and 8). The rim portions 47 can help positioning the outer ferrule 3. The rim portions 47 can also help stopping the outer conductor 23 when it is folded back over the inner ferrule 4.

Further, the inner ferrule 4 may be linked, at least temporarily, with a strap 61 to a termination ring 6. The termination ring 6 is advantageously formed of two essentially semi-cylindrical portions 62 connected by a joint 65. Then, the termination ring 6 advantageously has latching means 63 configured to secure the semi-cylindrical portions 62 together. Advantageously, an up-right edge 64 extends, at least partially around the longitudinal axis LA, outwardly radially from the longitudinal end linked to the strap 61.

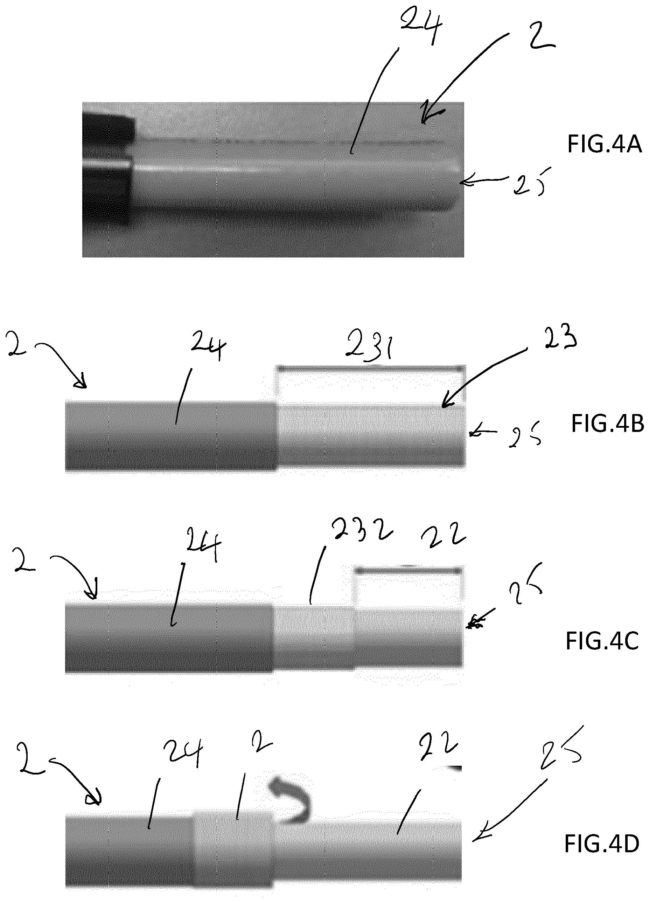

An example of method of terminating a shielded cable 2 is discloses below. For example, this method comprises the following stripping steps:
Step A: A shielded cable 2 is supplied for example to an automatic stripping tool (not shown) (see figure 4A).
Step B: A first portion of the outer insulator 24 is removed, at a free end 25 of the shielded cable 2, thereby forming a first stripped portion 231 of the outer conductor 23 (see figure 4B).
Step C: A portion of said first stripped portion 231 of the outer conductor 23 is cut and removed, thereby leaving on the inner insulator 22 a second stripped portion 232 of the outer conductor 23 (see figure 4C).
Step D: Said second stripped portion 232 the outer conductor 23 is flared and bent away from the free end 25 of the shielded cable 2 (see figure 4D).
Step E: A portion 221 of the inner insulator 22 is cut (see figure 4E).
Step F: This portion 221 of the inner insulator 22 that has been cut is removed, thereby forming at the free end 25 of the shielded cable 2, a stripped portion 211 of the inner conductor 21 (see figure 4F).

As already mentioned, in some embodiments, the inner ferrule 4 can be open, and the outer ferrule 3 can be chosen so that its smallest inner diameter is large enough to allow a terminal 5 (e.g. a female terminal as shown in figure 5) to pass through. Therefore, the inner ferrule 4 and/or the outer ferrule 3 can be mounted on the shielded cable 2, before, after or between stripping steps A to F.

Stripping steps may then be followed by ferrule mounting steps and crimping steps. The inner ferrule 4 is mounted over the inner insulator 22. The outer ferrule 3 is mounted over the inner ferrule 4 with at least a portion of the outer conductor 23 at least partially inserted between the outer ferrule 3 and the inner ferrule 4. A terminal 6 is crimped onto said stripped portion 211 of the inner conductor 21 and the outer ferrule 3 (e.g., by its rear portion 32) is crimped onto the inner ferrule 4, with at least a portion of the outer conductor 23 in between. The shielded cable 2 termination resulting from this method is shown in figure 6. One can see in figure 6 that the ribs 45 are deformed to compensate the plastic deformation of the outer ferrule 3. One should note that the outer ferrule 3 could be crimped onto the inner ferrule 4 before crimping the terminal 5 onto the inner conductor 21, or vice versa.

The outer ferrule 3 may then be electrically connected (e.g. by its front portion 31) to an electrical ground (not shown) such as a conductive casing.

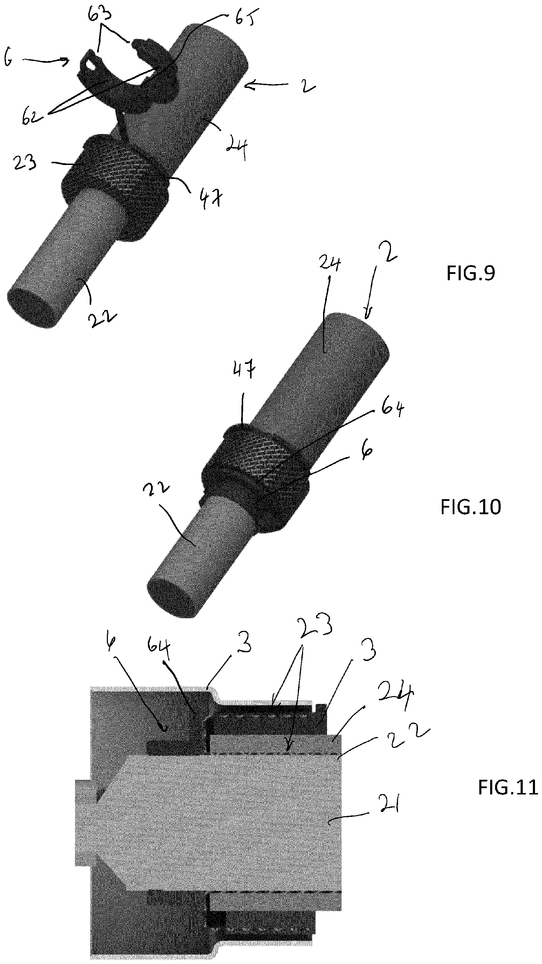

As illustrated by figure 8, when the outer conductor 23 is flared and optionally folded back over the outer insulator 24, it is possible that parts (e.g. wires) of the outer conductor 23 may not be properly flared, cut or folded and may make an electrical contact with the inner conductor 21 and/or the terminal 5. Alternatively, in a variant which is not illustrated the inner ferrule 4 is inserted below a portion of the outer conductor which is just flared (no folded back). Therefore, it can be advantageous to mount a termination ring 6 as above-described, onto the inner insulator 22 as illustrated by figure 9 and 10. To do so, for example, the strap 61 is folded (alternatively, the strap 61 can be cut) and the two halves of the termination ring 6 are folded and closed over the inner insulator 22, whereas the termination ring 6 is pushed backward against the outer conductor 23 up to the edge 48 of the inner ferrule 4 (i.e., against the outer conductor 23 blocked by the edge 48 of the inner ferrule 4).

The cable termination 100 resulting from the mounting of the termination ring 6 is shown in figure 11. One can see in figure 11 that the outer conductor 23 is confined in particular between the termination ring 6, the inner ferrule 4 and the outer ferrule 3, thereby preventing the outer conductor 23 from coming into contact with the inner conductor 21 and/or the terminal 5.

## Claims

1. An inner ferrule (4) for a terminal assembly (10) configured to terminate a shielded cable (2), the inner ferrule (4) being formed of a dielectric material, the inner ferrule (4) having a generally tubular shape, the inner ferrule (4) having an inner surface (41) and an outer surface (42) both extending around a longitudinal axis (LA),
**characterized in that** the inner ferrule (4) comprises a plurality of ribs (45) extending longitudinally parallel to the longitudinal axis (LA) and radially inwardly, over a height, from the inner surface (41) of the inner ferrule (4).

2. The inner ferrule (4) according to claim 1, having a cut-out (43) between the inner (41) and outer (42) surfaces, so that the inner (41) and outer (42) surfaces of the inner ferrule (4) are not continuous, allowing the inner ferrule (4) to be opened.

3. The inner ferrule (4) according to claim 2, having a joint (44) configured to facilitate opening of the inner ferrule (4).

4. The inner ferrule (4) according to any of the preceding claims, comprising a plurality of grooves (46) extending longitudinally parallel to the longitudinal axis (LA), each groove (46) being formed in the outer surface (42) of the inner ferrule (4) opposite to a rib (45).

5. The inner ferrule (4) according to any of the preceding claims, comprising a longitudinal end from which extends a strap (61) to which a termination ring (6) is connected.

6. The inner ferrule (4) according to claim 5, wherein the termination ring (6) is formed of two essentially semi-tubular portions connected by a joint (65).

7. The inner ferrule (4) according to claim 6, wherein the termination ring (6) comprises latching means (63) configured to secure the semi-tubular portions (62) together.

8. The inner ferrule (4) according to any of claims 5 to 7, wherein an up-right edge (64) extends, at least partially around the longitudinal axis (LA), outwardly radially from a longitudinal end.

9. Set of inner ferrules (4) comprising at least two inner ferrules (4) according to any of the preceding claims, said at least two inner ferrules (4) differing from the each other in the height of their respective ribs (45).

10. A terminal assembly (10) configured to terminate a shielded cable (2) having an inner conductor (21), an inner insulator (22) surrounding the inner conductor (21), an outer conductor (23) surrounding the inner insulator (22), and an outer insulator (24) surrounding the outer conductor (23), said terminal assembly (10) comprising an outer ferrule (3) formed of a conductive material, and said terminal assembly (10) further comprising an inner ferrule (4) according to any preceding claims, the outer conductor (23) comprising a portion between at least a portion of the outer surface (42) of the inner ferrule (4) and at least a portion of the outer ferrule (3).

11. A terminal assembly according to claim 9 in combination with any of claims 5 to 8, wherein the termination ring (6) is mounted over the inner insulator (22) and is configured to maintain the outer conductor (23) towards the inner ferrule (4).

12. A method of terminating a shielded cable (2) having an inner conductor (21), an inner insulator (22) surrounding the inner conductor (21), an outer conductor (23) surrounding the inner insulator (22), and an outer insulator (24) surrounding the outer conductor (23),
this method comprising stripping steps and ferrule mounting steps,
the stripping steps comprising:
- removing a first portion of the outer insulator (24), at a free end (25) of the shielded cable (2), thereby forming a first stripped portion (231) of the outer conductor (23),
- cutting and removing a portion of said first stripped portion (231) of the outer conductor (23), thereby leaving on the inner insulator (22) a second stripped portion (232) of the outer conductor (23),
the ferrule mounting steps comprising, independently of their order with regard to each stripping steps,
- mounting an inner ferrule (4) over the inner insulator (22),
- mounting an outer ferrule (3) over the inner ferrule (4) with at least a portion of the outer conductor (23) at least partially inserted between the outer ferrule (3) and the inner ferrule (4),
**characterized in that** the inner ferrule (4) comprises a plurality of ribs (45) extending longitudinally parallel to the longitudinal axis (LA) and radially inwardly, over a height, from the inner surface (41) of the inner ferrule (4).

13. The method of claim 12, comprising stripping a portion of the inner insulator (22), connecting a terminal (5) to a stripped portion (211) of the inner conductor, and crimping the outer ferrule (3) over the inner ferrule (4) with said at least a portion of the outer conductor (23) at least partially inserted between the outer ferrule (3) and the inner ferrule (4), the shielded cable (2) being chosen from cables with a cross-section comprised between 25 and 120 square-millimeters, the inner ferrule (4) being chosen with rib heights configured to adapt to the chosen shielded cable (2), the outer ferrule (3) being the same whatever the chosen shielded cable (2).

14. The method of claim 13, wherein the shielded cable (2) is chosen between a cable having a cross section of 35 square-millimeters, a cable having a cross section of 50 square-millimeters, a cable having a cross section of 70 square-millimeters and a cable having a cross section of 95 square-millimeters, the inner ferrule (4) being chosen with rib heights configured to adapt to the chosen shielded cable (2), the outer ferrule (3) being the same whatever the chosen shielded cable (2).

15. The method of claim 14, comprising a step of inserting the terminal (5) connected to the shielded cable (2) through the outer ferrule (3).

16. The method of any one of claims 12 to 15, comprising a step of folding back said second stripped portion (232) of the outer conductor (23) in a direction away from the free end (25) of the shielded cable (2).

17. The method of claim 16, in combination with any one of claims 5 to 7, comprising a step of mounting the termination ring (6) over the inner insulator (22) to maintain the outer conductor (23) towards the inner ferrule (4).
